(19) Europäisches Patentamt
European Patent Office
Office européen des brevets

(11) **EP 4 512 672 A1**

(12) **EUROPEAN PATENT APPLICATION**
published in accordance with Art. 153(4) EPC

(43) Date of publication:
**26.02.2025 Bulletin 2025/09**

(21) Application number: **23831546.9**

(22) Date of filing: **28.06.2023**

(51) International Patent Classification (IPC):
**B60T 5/00** (2006.01)     **F16D 66/00** (2006.01)
**B60T 8/17** (2006.01)

(52) Cooperative Patent Classification (CPC):
**B60T 5/00; B60T 8/17; F16D 66/00**

(86) International application number:
**PCT/JP2023/024076**

(87) International publication number:
**WO 2024/005106 (04.01.2024 Gazette 2024/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.06.2022 JP 2022105768**

(71) Applicant: **Hitachi Construction Machinery Co.,
Ltd.**
**Tokyo 110-0015 (JP)**

(72) Inventors:
• **AKIMOTO, Hiroki**
  **Tsuchiura-shi, Ibaraki 300-0013 (JP)**
• **ITAI, Yuudai**
  **Tsuchiura-shi, Ibaraki 300-0013 (JP)**
• **SHIMOMURA, Hirokazu**
  **Tsuchiura-shi, Ibaraki 300-0013 (JP)**
• **MIURA, Takahiro**
  **Tsuchiura-shi, Ibaraki 300-0013 (JP)**

(74) Representative: **Manitz Finsterwald
Patent- und Rechtsanwaltspartnerschaft mbB
Martin-Greif-Strasse 1
80336 München (DE)**

(54) **WORK VEHICLE**

(57)     Provided is such control that a delivery flow rate of a cooling pump increases as the temperature of cooling oil detected by a temperature sensor increases, and, in a case in which an operation mode of a dump truck is switched from a normal mode for executing work involving an operation of a brake device to a brake test mode for determining health of the brake device, provided is such control that the rotation speed of the cooling pump is higher in the brake test mode than that in the normal mode with respect to the temperature of the cooling oil detected by the temperature sensor in at least a part of the temperature range, it is determined whether an abnormality is occurring or not in the brake device on the basis of the detection result from the pressure sensor in the brake test mode, and abnormality occurrence information is output in a case in which an abnormality is determined to be occurring. With this configuration, fuel consumption can be reduced at the normal time, and the health of a brake cooling circuit can be determined at an inspection time for the circuit.

FIG. 6

EP 4 512 672 A1

## Description

Technical Field

The present invention relates to a work vehicle.

Background Art

In a work site such as a mine, a large number of large dump trucks as work machines for transporting ores and stripped soil from a loading place to a unloading place operate, and have a brake device mounted thereon, which brake device, for example, brings a rotating member rotating together with an output shaft and a fixed member fixed to a vehicle body side into press contact, to generate a braking force.

In this brake device, the rotating member generates heat due to friction in a braking state in which the rotating member and the fixed member are in the press contact, a loss in a driving force occurs, and it is concerned that a fuel consumption increased. Moreover, also in a case of a non-braking state in which the rotating member and the fixed member are not in press contact with each other, in a case in which a large amount of cooling oil is interposed between the rotating member and the fixed member, a loss in the driving force caused by a part of the driving force of the output shaft being transmitted from the rotating member to the cooling oil is conceivable.

Thus, a brake cooling circuit for suppressing a temperature increase in the brake device is provided and hydraulic fluid for cooling is circulated between the fixed member and the rotating member to cool the rotating member, thereby suppressing the temperature increase in the rotating member. As prior art relating to the brake cooling circuit, for example, one described in Patent Document 1 is known.

In patent document 1, there is disclosed a brake device which sets a supply amount of lubricating oil to a first supply amount in a case in which the brake device in a braking state in which a rotating member and a fixed member are in press contact with each other, obtains the temperature of the rotating member through calculation in a case in which the brake device is switched from the braking state to a non-braking state, calculates a lubricating oil supply time required for the temperature of the rotating member to decrease to a predetermined target temperature through the supply of the lubricating oil at the first supply amount, and reduces the supply amount of the lubricating oil from the first supply amount to a second supply amount smaller than the first supply amount in a case in which the lubricating oil supply time has elapsed since a time point at which the brake device is switched from the braking state to the non-braking state.

Moreover, in a hydraulic circuit system such as the brake device, upon determining whether the oil in the circuit is normally circulating or not, it is conceivable, for example, to use a pressure sensor to check a circuit pressure to determine health of the circuit according to the circuit pressure. However, the circuit pressure reaches a value insufficient for the detection of the pressure sensor depending on a flow rate of hydraulic fluid circulating in the hydraulic circuit, and hence it is concerned that the health cannot be determined.

To address such a problem, as prior art for detecting abnormality of the circuit regardless of the state of the circuit, for example, one described in Patent Document 2 is known. In Patent Document 2, there is disclosed a hydraulic pressure control system, including a pump output power switching device which selectively switches a hydraulic pump to high output power and low output power, an accumulator connected to a hydraulic line between the hydraulic pump and a hydraulic device, accumulates a part of hydraulic fluid delivered from the hydraulic pump when the hydraulic pump is at the high output power, and supplies the hydraulic fluid to the hydraulic device when the hydraulic pump is at the low output power, a check valve for pump which allows a flow of the hydraulic fluid from the hydraulic pump to the hydraulic device and the accumulator and blocks a flow of the hydraulic fluid from the accumulator to the hydraulic pump, a pressure sensor that senses a pressure of the hydraulic fluid supplied from either one of the hydraulic pump and the accumulator to the hydraulic device, and a controller that outputs a low output power command to a pump output power switching device to switch the hydraulic pump to the low output power if a pressure sensing value of the pressure sensor is equal to or higher than an upper limit value set in advance when the hydraulic pump is at the high output power, and outputs a high output power command to the pump output power switching device to switch the hydraulic pump to the high output power if the pressure sensing value of the pressure sensor is equal to or lower than a lower limit value set in advance when the hydraulic pump is at the low output power, in which the controller is configured to compute a command continuation time during which the command is in a state in which the command output to the pump output power switching device does not change, determines the pump output power switching device is abnormal when this command continuation time is equal to or longer than a predetermined value, and outputs this determination result.

Prior Art Document

Patent Documents

Patent Document 1: WO-2009-034890-A
Patent Document 2: WO-2018-179070-A

Summary of the Invention

Problem to be Solved by the Invention

However, in Prior Art described in Patent Document 2, a selector valve of a valve which feeds the hydraulic fluid to the accumulator is considered to be defective in a case in which a charge time of the accumulator is equal to or longer than a specified value, that is, in a case in which an accumulator pressure does not change. Thus, where control of reducing a flow rate according to an oil temperature is executed for a reduction in fuel consumption, if a travel pattern is such a travel pattern that the oil temperature does not become high, the flow rate remains low. That is, the condition for determining the defect is not satisfied, and hence the health cannot be determined.

The present invention has been made in view of the problem described above and has an object to provide a work vehicle capable of reducing the fuel consumption at a normal time and determining health of a brake cooling circuit at an inspection time of the circuit.

Means for Solving the Problem

The present application includes a plurality of means for solving the problem described above. One example thereof is a work vehicle including a brake device that generates a braking force through a press contact between a rotating member rotating together with an output shaft and a fixed member fixed to a body side and is capable of using cooling oil to cool the rotating member, a pump that supplies the cooling oil in an amount corresponding to a rotation speed to the brake device, a temperature sensor that detects a temperature of the cooling oil, a pressure sensor that detects a pressure of the cooling oil, and a controller that is configured to control the rotation speed of the pump on the basis of detection results from the temperature sensor and the pressure sensor, in which the controller is configured to: control the rotation speed of the pump such that the rotation speed increases as the temperature of the cooling oil detected by the temperature sensor increases, and in a case in which an operation mode of the work vehicle is switched from a normal mode for executing work involving an operation of the brake device to a brake test mode for determining health of the brake device, control the rotation speed of the pump such that the rotation speed of the pump is higher in the brake test mode than that in the normal mode with respect to the temperature of the cooling oil detected by the temperature sensor in at least a part of a temperature range, determine whether an abnormality is occurring or not in the brake device on the basis of the detection result from the pressure sensor in the brake test mode, and output abnormality occurrence information in a case in which the controller determines that an abnormality is occurring.

Advantages of the Invention

According to the present invention, low fuel consumption is achieved by reducing the flow rate at the normal time, and the flow rate is increased at the inspection time for the circuit to enable the determination of the health of the brake cooling circuit.

Brief Description of the Drawings

FIG. 1 is a top plan view for schematically illustrating an exterior of a dump truck being an example of an electrically driven work vehicle.
FIG. 2 is a cross sectional view made along a plane indicated by an arrow A of FIG. 1.
FIG. 3 is a view for schematically illustrating an appearance of an interior of a cabin.
FIG. 4 is a diagram for extracting and illustrating a cooling system for wet brakes together with a relating configurations.
FIG. 5 is a hardware configuration diagram of a controller.

FIG. 6 is a graph for illustrating an example of control tables used in the controller in a first embodiment.
FIG. 7 is a flowchart for illustrating a flow of processing in an operation of a brake cooling system.
FIG. 8 is a graph for illustrating an example of the control tables used in the controller in a second embodiment.

Modes for Carrying Out the Invention

A description is now given of an embodiment of the present invention with reference to drawings. In the present embodiment, a description is given while a dump truck having a vessel for loading a loading target is exemplified as an example of a work vehicle, but the description can be applied to another work vehicle having wet brakes.

Moreover, in a description given below, when a plurality of the same components exist, a reference character (number) is suffixed with an alphabet, and this alphabet is sometimes omitted to generally refer to the plurality of components. That is, for example, when two wet brakes 3a and 3b exist, they are sometimes generally referred to as wet brakes 3. Moreover, a signal line and the like a connection relationship of which is apparent from the description is not sometimes illustrated.

<First Embodiment>

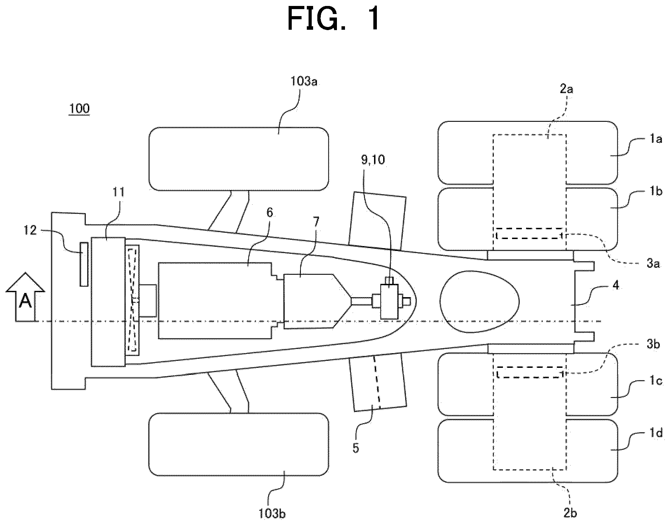

A detailed description is now given of a first embodiment of the present invention with reference to FIG. 1 to FIG. 7.

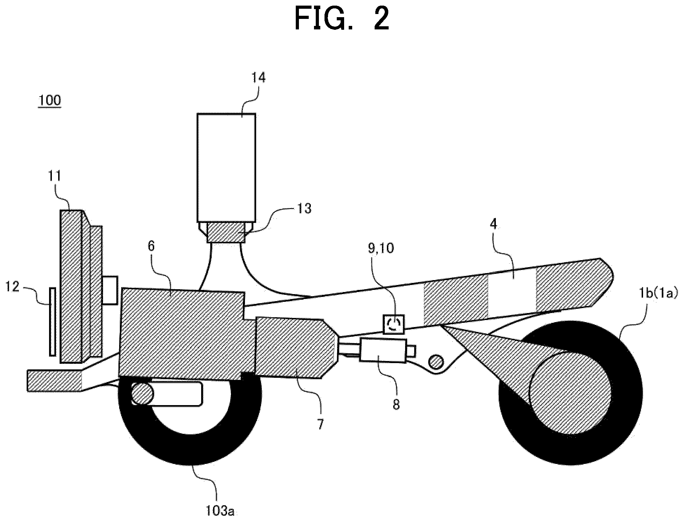

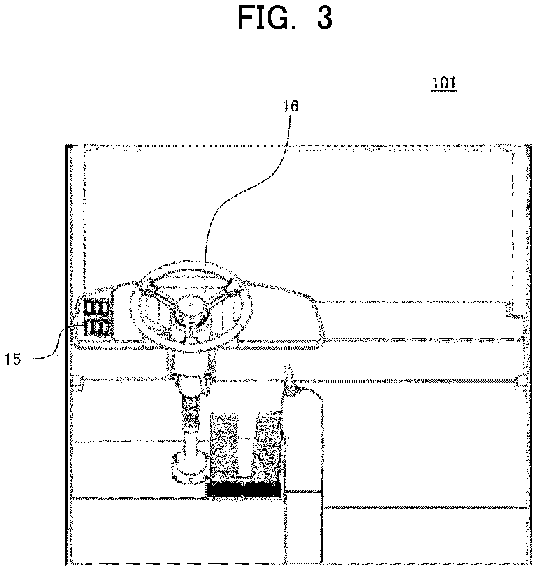

FIG. 1 is a top plan view for schematically illustrating an exterior of the dump truck being the example of the work vehicle according to the present embodiment and FIG. 2 is a cross-sectional view made on a plane indicated by an arrow A of FIG. 1. Moreover, FIG. 3 is a view for schematically illustrating an appearance of an interior of a cabin.

In FIG. 1 and FIG. 2, a dump truck 100 schematically includes a main frame 4 which extends in a front-rear direction to form a support structure, the vessel (not illustrated) which is disposed in an upper portion of the main frame 4 to extend in the front-rear direction and is provided to the main frame 4 through pin-coupling at a lower portion of a rear end thereof so as to be able to tilt, front wheels 103a and 103b (driven wheels) which are provided to right and left portions, respectively, on a front side below the main frame 4, rear wheels 1a, 1b, 1c, and 1d (driving wheels) which are provided to right and left portions, respectively, on a rear side below a vehicle body, a cabin 101 (not illustrated in FIG. 1 and FIG. 2) which is provided on a front side above the main frame 4 and which an operator who operates the dump truck 100 is aboard, an engine 6 which is disposed on the main frame 4, a power generator 7 and a main pump 8 which are driven by the engine 6, speed reduction gears 2a and 2b which are mounted to hydraulic motors which use hydraulic operating oil delivered from a main pump 8 to drive the rear wheels 1a, 1b, 1c, and 1d (driving wheels) and support the rear wheels, wet brakes 3a and 2b (brake devices) mounted inside the speed reduction gears 2a and 2b, a cooling pump 9 which supplies cooling oil to the wet brakes 3, an electrically driven motor 10 which drives the cooling pump 9, a tank 5 installed on a left side portion of the main frame 4 and stores the hydraulic operating oil delivered from the main pump 8 and the cooling oil for the wet brakes 3 delivered from the cooling pump 9, a beam 13 which is disposed in an upper portion of the main frame 4 so as to extend in a left-right direction of the vehicle body, and an electric power controller 14 which is installed in an upper portion of the beam 13 and controls an electric power system including the electrically driven motor 10. Moreover, in a front portion of the vehicle body, a radiator 11 which cools a coolant of the engine 6, and a cooling oil cooler 12 which cools the cooling oil supplied to the wet brakes 3 are disposed. Note that, the inside of the tank 5 is partitioned and is configured such that the hydraulic operating oil and the cooling oil are not mixed with each other.

The wet brake 3 is configured to generate a braking force through a press contact between a rotating member which rotates together with an output shaft and a fixed member fixed to the vehicle body side and is configured to use the cooling oil to be able to cool the rotating member.

In FIG. 3, to the cabin 101, a switch for brake test mode 15 (mode switching switch) which selectively switches an operation mode of the dump truck 100 to either one of a normal mode for executing work accompanying an operation of the brake devices and a brake test mode for determining health of the brake devices, a monitor 16 which notifies the operator of abnormality occurrence information, information about the selected operation mode, and the like through a screen display, and a buzzer (not illustrated) which notifies the operator of information such as the abnormality occurrence information through sound or voice.

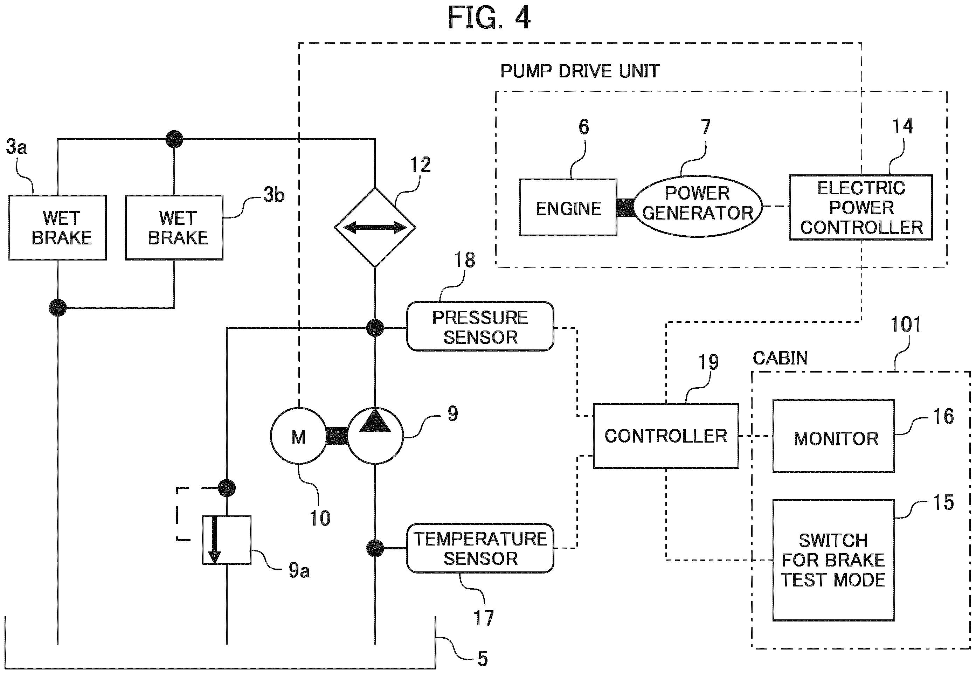

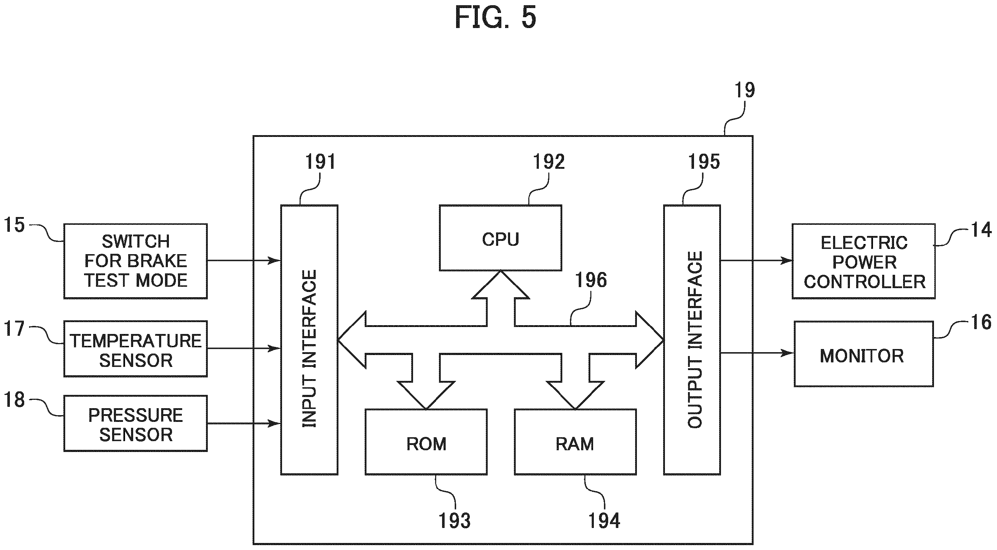

FIG. 4 is a diagram for extracting and illustrating a cooling system for the wet brakes together with relating configurations. Moreover, FIG. 5 is a hardware configuration diagram of the controller.

In FIG, 4, in the cooling system of the wet brakes 3, the wet brakes 3a and 3b are cooled by the cooling pump 9 driven by the electrically driven motor 10 supplying the cooling oil stored in the tank 5 to the wet brakes 3a and 3b via the cooling oil cooler 12. The cooling oil used for the cooling in the wet brakes 3a and 3b is caused to flow back to the tank 5.

To a hydraulic line on a suction side (tank 5 side) of the cooling pump 9, a temperature sensor 17 which detects a temperature of the cooling oil suctioned from the tank 5 to the cooling pump 9 and transmits a detection result to the controller 19 is provided. Moreover, to a hydraulic line on a delivery side (cooling oil cooler 12 side) of the cooling pump 9, a pressure sensor 18 which detects a pressure of the cooling oil delivered from the cooling pump 9 to the cooling oil cooler 12 and transmits a detection result to the controller 19, and a relief valve 9a which limits the pressure in the hydraulic line on the delivery side of the cooling pump 9 to a pressure equal to or lower than a predetermined certain pressure are provide.

The electrically driven motor 10 is driven by electric power generated by the power generator 7 driven by the engine 6 and supplied via the electric power controller 14. The electric power controller 14 controls the electric power supplied to the electrically driven motor 10 in response to a command from the controller 19, thereby controlling the rotation speed of the electrically driven motor 10 and the cooling pump 9 driven by the electrically driven motor 10. That is, the rotation speed of the cooling pump 9 is controlled in response to the command from the controller 19. The cooling pump 9 supplies the cooling oil in an amount corresponding to the rotation speed to the wet brakes 3a and 3b via the cooling oil cooler 12.

The controller 19 controls an operation of the entire cooling system, uses a switching signal from the switch for brake test mode 15 and the detection results from the temperature sensor 17 and the pressure sensor 18 to control the rotation speed of the cooling pump 9 on the basis of predetermined control tables (described later), determines health of the cooling system, and outputs, in a case in which the controller 19 determines an abnormality is occurring, abnormality occurrence information to the monitor 16 and the buzzer (not illustrated), thereby notifying the operator of the occurrence of the abnormality.

Specifically, where the switch for brake test mode 15 (mode switching switch) is switched to the normal mode, the controller 19 provides, in accordance with the control table in the normal mode, such control that the rotation speed of the cooling pump 9 increases as the temperature of the cooling oil detected by the temperature sensor 17 increases, that is, the flow rate of the cooling oil supplied to the wet brakes 3a and 3b increases as the temperature of the wet brakes 3 and 3b (that is, the temperature of the cooling oil caused to flow back to the tank 5 via the wet brakes 3a and 3b) increases. As a result, if a use frequency of the wet brakes 3a and 3b is high, a sufficient cooling effect can be provided, and if the use frequency is low, the flow rate of the cooling oil is reduced, thereby being able to achieve low fuel consumption.

Moreover, where the switch for brake test mode 15 (mode switching switch) is switched to the brake test mode for determining the health of the cooling system, the controller 19 provides, in accordance with the control table in the brake test mode, such control that the rotation speed of the cooling pump 9 increases as the temperature of the cooling oil detected by the temperature sensor 17 increases, that is, the flow rate of the cooling oil supplied to the wet brakes 3a and 3b increases as the temperature of the wet brakes 3 and 3b (that is, the temperature of the cooling oil caused to flow back to the tank 5 via the wet brakes 3a and 3b) increases, and determines whether the abnormality is occurring or not in the cooling system according to whether the detection result of the pressure sensor 18 is within a predetermined range or not. According to the control table in the brake test mode, there is provided such control that the rotation speed of the cooling pump 9 with respect to the temperature of the cooling oil detected by the temperature sensor 17 is higher in the brake test mode than that in the normal mode in at least a part of the temperature range. As a result, at the time of inspection of the circuit, even when the use frequency of the wet brakes 3a and 3b is low, the health of the brake cooling system can be determined.

Note that, the controller 19 may provide such control that the cooling pump 9 is stopped (that is, the electrically driven motor 10 is stopped) when the controller 19 determines that the abnormality is occurring.

In FIG. 5, the controller 19 includes a central processing unit (CPU) 192, memories such as a ROM (Read Only Memory) 193 and a RAM (Random Access Memory) 194, and interfaces such as an input interface 191 and an output interface 195. Programs stored in advance in the ROM 193 and the RAM 194 are executed in the central processing unit (CPU) 192. The central processing unit (CPU) 192 executes processing on the basis of set values stored in the ROM 193 and the RAM 194 and signals input from the input interface 191, and outputs signals from the output interface 195. In the present embodiment, the system inside the controller 19 is executed as a combination of several programs, and is configured to input the signals and the like via the input interface 191 from the switch for brake test mode 15, the temperature sensor 17, and the pressure sensor 18, and outputs the signals via the output interface 195 to the electric power controller 14, the monitor 16, and the like after the processing is executed by the central processing unit (CPU) 192.

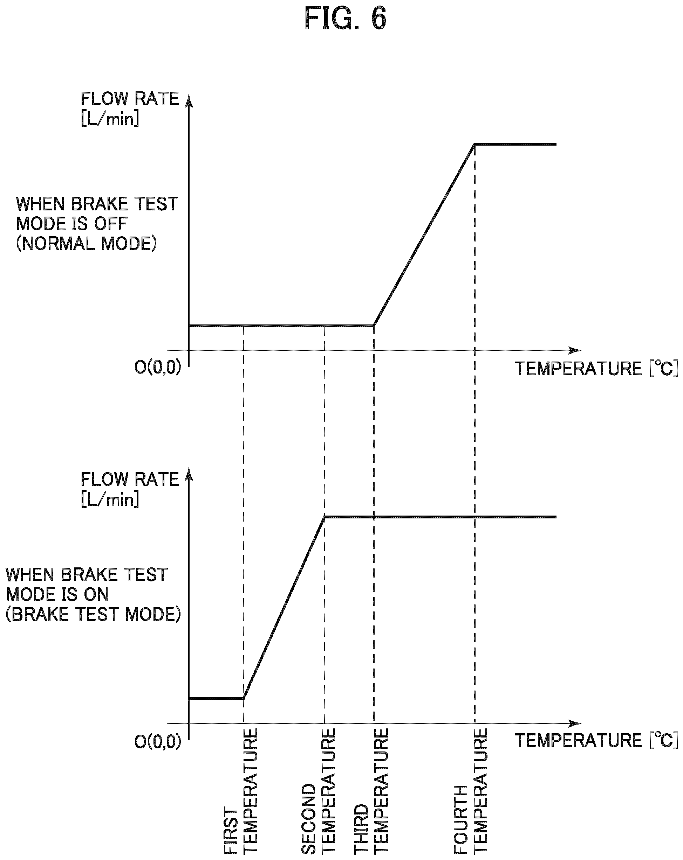

FIG. 6 is a table for illustrating an example of the control tables used in the controller, horizontal axes indicate the temperature of the cooling oil, and vertical axes indicate the delivery flow rate from the cooling pump. Note that, in FIG. 6, the vertical axes indicate the flow rate of the cooling oil delivered from the cooling pump 9, but the delivery flow rate of the cooling pump 9 increases and decreases according to the rotation speed, and hence the control for the rotation speed and the control for the flow rate have the same meaning.

As illustrated in FIG. 6, the control table when the brake test mode is ON (brake test mode) is set such that the delivery flow rate (rotation speed) of the cooling pump 9 is controled to be constant independently of the temperature in a temperature range in which the temperature of the cooling oil detected by the temperature sensor 17 is lower than a predetermined first temperature and a temperature range in which the temperature is higher than a second temperature set to be higher than the first temperature, and such that the delivery flow rate of the cooling pump 9 is controled to increase (the rotation speed increases) as the temperature of the cooling oil increases in a temperature range in which the temperature is equal to or higher than the first temperature and equal to or lower than the second temperature.

Moreover, the control table when the brake test mode is OFF (normal mode) is set such that the delivery flow rate (rotation speed) of the cooling pump 9 is controlled to be constant independently of the temperature in a temperature range in which the temperature of the cooling oil detected by the temperature sensor 17 is lower than a predetermined third temperature and a temperature range in which the temperature is higher than a fourth temperature set to be higher than the third temperature, and such that the delivery flow rate of the cooling pump 9 is controlled to increase (the rotation speed increases) as the temperature of the cooling oil increases in a temperature range in which the temperature is equal to or higher than the third temperature and equal to or lower than the fourth temperature.

At this time, the first temperature is set to be lower than the third temperature and the second temperature is set to be lower than the fourth temperature. That is, in the normal mode, the sufficient cooling effect can be obtained when the use frequency of the wet brakes 3a and 3b is high, and the fuel consumption can be reduced by reducing the flow rate of the cooling oil when the use frequency is low. Moreover, in the brake test mode, in at least a part of the temperature range (in the example of FIG. 6, a range from the first temperature to the fourth temperature), there is provided such control that the delivery flow rate (rotation speed) of the cooling pump 9 is higher than that in the normal mode, and hence, at the time of the inspection of the circuit, even where the use frequency of the wet brakes 3a and 3b is low, that is, even where the delivery flow rate of the cooling pump 9 is low and the pressure unlikely reaches a specified value for determining the health of the circuit, the delivery pressure of the cooling pump 9 can sufficiently be increased and the health of the brake cooling system can be determined.

Note that, into the inside of the wet brake 3a and 3b, floating seals which prevent a leakage of the cooling oil are built. A withstand pressure of this floating seal is low, and hence it is required that the pressure of the cooling oil applied to the wet brakes 3a and 3b is suppressed to a pressure lower than the withstand pressure of the floating seal. Meanwhile, the viscosity of the cooling oil is high when the temperature is low, and hence the pressure at the time of the flow of the oil likely increases. Thus, the flow rate of the cooling oil is determined such that, for example, the pressure is lower than the withstand pressure of the floating seal even at the lowest expected oil temperature. Note that, an oil passage resistance of the cooling oil cooler 12 is high, and hence if a relief pressure of the relief valve 9a is carelessly set to a pressure lower than the floating seal withstand pressure, a large amount of the cooling oil flows back from the relief valve 9a, and the flow rate of the cooling oil flowing through the cooling oil cooler 12 and the wet brakes 3a and 3b decreases. Thus, at the time of low oil temperature, the delivery flow rate is changed so as to suppress the flow rate, thereby protecting the floating seals and the relief pressure is set within a range in which the flow rate of the cooling oil to the wet brakes 3a and 3b is sufficiently secured. Specifically, the relief pressure of the relief valve 9a is set to achieve such a relationship that (withstand pressure of cooling oil cooler 12) > (relief pressure of relief valve 9a) > (floating seal withstand pressure).

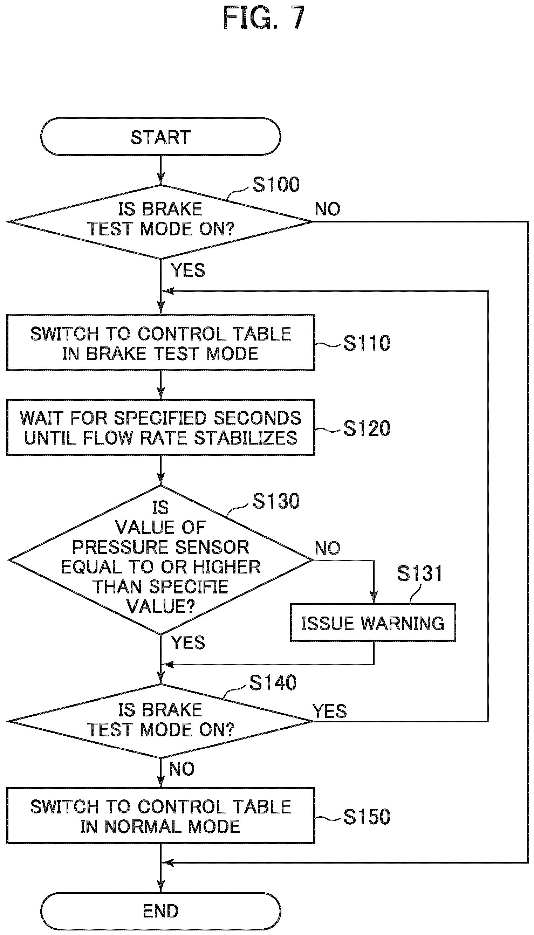

FIG. 7 is a flowchart for illustrating a flow of the processing in the operation of the brake cooling system. The controller 19 repeatedly executes processing in Steps S100 to S150.

In FIG. 7, the controller 19 determines whether the brake test mode is ON or not, that is, whether the switch for brake test mode 15 is switched to the brake test mode or not on the basis of the switching signal from the switch for brake test mode 15 (Step S100), and maintains the control table in the normal mode to execute the control for the brake cooling system when a determination result is NO.

[0037]　Moreover, when a determination result is YES in Step S100, that is, when the switch for brake test mode 15 is switched to the brake test mode, the controller 19 switches the control table to the control table in the brake test mode (Step S110), and waits for a predetermined time (for example, 3 [second]) until the delivery flow rate of the cooling pump 9 is stabilized (Step S120).

After that, the controller 19 determines whether the detection result of the pressure sensor 18 is equal to or higher than a value (for example, 0.1 [MPa]) predetermined as a threshold (lower limit threshold) for determining the abnormality of the cooling system (Step S130) and outputs, when a determination result is NO, the abnormality occurrence information to the monitor 16 and the buzzer, thereby notifying the operator of the occurrence of the abnormality (Step S131).

Moreover, when the determination result is YES in Step S130 or when the processing in Step S131 is finished, the controller 19 then determines whether the brake test mode is ON or not, that is, whether the mode is switched to the brake test mode or not (Step S140).

When a determination result in Step S140 is YES, that is, when the switching to the brake test mode is continued, the controller 19 repeats the processing in Steps S110 to S131.

Moreover, when the determination result in Step S140 is NO, that is, when the mode is switched to the normal mode, the controller 19 switches the control table to the control table in the normal mode (Step S150) and executes the control of the brake cooling system.

Note that, in FIG. 7, the description is given while there is exemplified the case in which it is determined that the abnormality such as a leakage of the cooling oil due to a damage of a hose forming the hydraulic circuit or inoperability of the cooling pump 9 due to an abnormality of the electrically driven motor 10 is occurring, in the case in which the detection result of the pressure sensor 18 is lower than the predetermined lower limit threshold, but the configuration is not limited to this example, and there may be provided such a configuration that an upper limit threshold different from the lower limit threshold is set, and it is determined that an abnormality such as clogging of the hydraulic circuit is occurring in a case in which the detection result of the pressure sensor 18 is higher than the upper limit threshold.

A description is now given of effects of the present embodiment configured as described above.

Prior art which determines whether the oil is normally circulating or not in a circuit in a hydraulic circuit system such as the brake device includes a technology which determines, regarding a selector valve of a valve which feeds hydraulic fluid to an accumulator, that the selector valve is defective in a case in which an accumulator pressure does not change when a charge time of the accumulator is equal to or longer than a specified value.

However, for example, where control of reducing a flow rate according to an oil temperature is executed for a reduction in fuel consumption, when a travel pattern is such a travel pattern that the oil temperature does not become high, the flow rate remains low. That is, the condition for determining the defect is not satisfied, and hence the health cannot be determined.

Meanwhile, the present embodiment is configured such that there is provided the control that the rotation speed of the cooling pump 9 increases (the delivery flow rate increases) as the temperature of the cooling oil detected by the temperature sensor 17 increases, and, when the operation mode of the dump truck 100 is switched from the normal mode for executing the work involving the operation of the brake devices to the brake test mode for determining the health of the brake devices, there is provided the control that the rotation speed of the cooling pump 9 is higher in the brake test mode than that in the normal mode with respect to the temperature of the cooling oil detected by the temperature sensor 17 in at least a part of the temperature range, it is determined whether the abnormality is occurring or not in the brake devices on the basis of the detection result from the pressure sensor 18 in the brake test mode, and the abnormality occurrence information is output when the abnormality is determined to be occurring. Thus, the fuel consumption can be reduced at the normal time, and the health of the brake cooling circuit can be determined at the inspection time for the circuit.

<Second Embodiment>

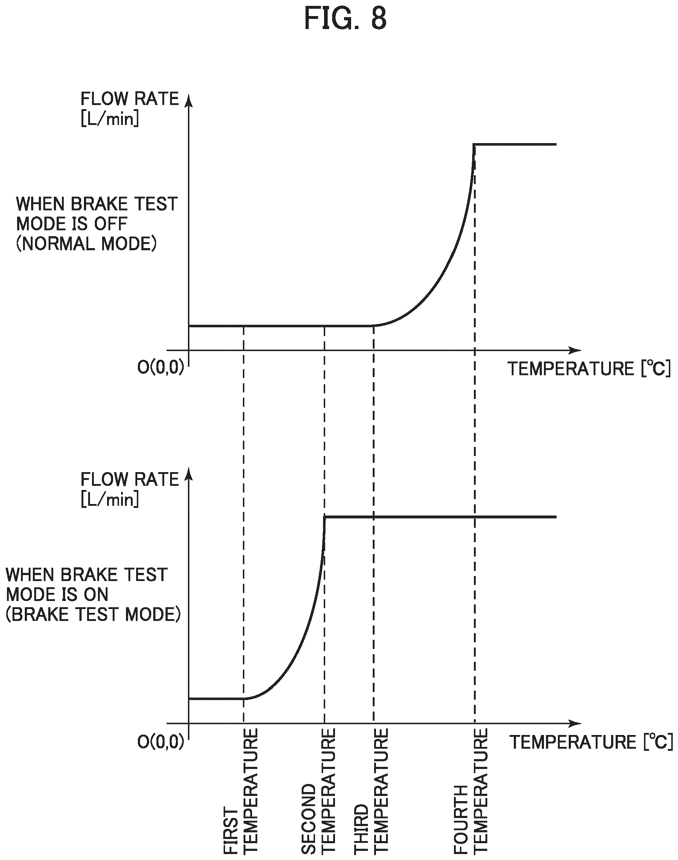

A detailed description is now given of a second embodiment of the present invention with reference to FIG. 8.

The present embodiment indicates a case in which, in place of the control tables having the linear characteristic exemplified in the first embodiment, control tables having a nonlinear characteristic are used. In FIG. 8 and the description, the same reference characters are given to portions that are similar to those in the first embodiment and a description thereof is omitted.

FIG. 8 is a graph for illustrating an example of the control tables used in the controller in the present embodiment, horizontal axes indicate the temperature of the cooling oil, and vertical axes indicate the delivery flow rate from the cooling pump. Note that, in FIG. 8, the vertical axes indicate the flow rate of the cooling oil delivered from the cooling pump 9, but the delivery flow rate of the cooling pump 9 increases and decreases according to the rotation speed, and hence the control for the rotation speed and the control for the flow rate have the same meaning.

In general, a relationship between viscosity of the oil and the temperature is expressed in the logarithm and it is known that a pressure loss of the oil is proportional to the square of the flow rate. Thus, in the present embodiment, a relationship among the flow rate of the cooling oil, the temperature, and the pressure loss is experimentally obtained and this relationship is used to define the control tables having the nonlinear characteristic.

A relationship between the kinematic viscosity and the temperature of the cooling oil is obtained as given by Equation (1).

$$\log(\log(v + K)) = n - m*\log(T) \ ... \ \text{Equation (1)}$$

In Equation (1), the kinematic viscosity is v [cSt], the absolute temperature is T [K], and constants determined by the oil are k, m, and n.

Moreover, a relationship between the flow rate and the pressure loss of the cooling oil is obtained as given by Equation (2).

$$\Delta P = \rho/2*\lambda*L/D*V^2*10^6 \ ... \ \text{Equation (2)}$$

In Equation (2), the pressure loss is $\Delta P$ [Mpa], the density is $\rho$ [kg/m^3], the pipe friction coefficient is $\lambda$, the pipe length is L [m], the pipe diameter is D [m], and the pipe flow velocity is V [m/s].

As illustrated in FIG. 8, the control table when the brake test mode is ON (in the brake test mode) is set such that the delivery flow rate (rotation speed) of the cooling pump 9 is controlled to be constant independently of the temperature in the temperature range in which the temperature of the cooling oil detected by the temperature sensor 17 is lower than the predetermined first temperature and the temperature range in which the temperature is higher than the second temperature set to be higher than the first temperature, and such that the delivery flow rate of the cooling pump 9 is controlled to increase (the rotation speed increases) nonlinearly as the temperature of the cooling oil increases in the temperature range in which the temperature is equal to or higher than the first temperature and equal to or lower than the second temperature. At this time, by providing such a setting that the flow rate of the cooling oil is increased in a range in which the pressure of the cooling oil does not reach the withstand pressure of the floating seal, the pressure of the cooling oil can certainly be detected by the pressure sensor 18 in the brake test mode.

Moreover, the control table when the brake test mode is OFF (in the normal mode) is set such that the delivery flow rate (rotation speed) of the cooling pump 9 is controlled to be constant independently of the temperature in the temperature range in which the temperature of the cooling oil detected by the temperature sensor 17 is lower than the third predetermined temperature and the temperature range in which the temperature is higher than the fourth temperature set to be higher than the third temperature, and such that the delivery flow rate of the cooling pump 9 is controlled to increase (the rotation speed increases) nonlinearly as the temperature of the cooling oil increases in the temperature range in which the temperature is equal to or higher than the third temperature and equal to or lower than the fourth temperature. At this time, by setting the flow rate of the cooling oil such that the pressure of the cooling oil does not reach the pressure at which the relief valve 9a is activated, the occurrence of the loss is more suppressed.

The first temperature is set to be lower than the third temperature and the second temperature is set to be lower than the fourth temperature. That is, in the normal mode, the sufficient cooling can be obtained when the use frequency of the wet brakes 3a and 3b is high and the fuel consumption can be reduced by reducing the flow rate of the cooling oil when the use frequency is low. Moreover, in the brake test mode, in at least a part of the temperature range (in the example of FIG. 6, the range from the first temperature to the fourth temperature), there is provided such control that the delivery flow rate (rotation speed) of the cooling pump 9 is higher than that in the normal mode, and hence, at the time of the inspection of the circuit, even when the use frequency of the wet brakes 3a and 3b is low, that is, even when the delivery flow rate of the cooling pump 9 is low and the pressure unlikely reaches the specified value for the brake test, the delivery pressure of the cooling pump 9 can sufficiently be increased and the health of the brake cooling system can be determined.

Note that, as described before, since the role of the first temperature and the second temperature in the brake test mode and the role of the third temperature and the fourth temperature in the normal mode are different from each other, a shape of a curve of the flow rate change between the first temperature and the second temperature in the brake test mode and a shape of a curve of the flow rate change between the third temperature and the fourth temperature in the normal mode may be set to be different from each other.

<Supplementary Notes>

It is to be noted that the present invention is not limited to the embodiments described above, but includes various modification examples and combinations within a scope not departing from the purport thereof.

For example, in the embodiments described above, the case in which the cooling pump 9 is driven by the electrically driven motor 10 is exemplified, but there may be provided such a configuration that other power (for example, a hydraulic motor and a hydraulic pump) the rotation speed of which can be optionally changed may be used to drive the cooling pump 9.

Moreover, in the embodiments, there is exemplified the case in which the electrically driven motor 10 is driven by the electric power generated by the engine 6 driving the power generator 7, but there may be provided such a configuration that the electric power stored in a battery or the like may be used.

Moreover, the present invention is not limited to the form including all of the configurations described in the embodiments mentioned above, but includes a form obtained by partially removing the configurations. Moreover, a part or all of each of the configurations, the functions, and the like described above may be implemented through design using an integrated circuit or the like. Moreover, each of the configurations, the functions, and the like described above may be implemented through software by a processor interpreting and executing a program which implements each function.

Description of Reference Characters

    1a, 1b, 1c, 1d: Rear wheel
    2a, 2b: Speed reduction gear
    3a, 3b: Wet brake
    4: Main frame
    5: Tank
    6: Engine
    7: Power generator
    8: Main pump
    9: Cooling pump
    9a: Relief valve

10: Electrically driven motor
11: Radiator
12: Cooling oil cooler
13: Beam
14: Electric power controller
15: Switch for brake test mode
16: Monitor
17: Temperature sensor
18: Pressure sensor
19: Controller
100: Dump truck
101: Cabin
103a, 103b: Front wheel
191: Input interface
192: Central processing unit (CPU)
193: ROM (Read Only Memory)
194: RAM (Random Access Memory)
195: Output interface

**Claims**

1. A work vehicle comprising:

   a brake device that generates a braking force through a press contact between a rotating member rotating together with an output shaft and a fixed member fixed to a body side, and is capable of using cooling oil to cool the rotating member;
   a pump that supplies the cooling oil in an amount corresponding to a rotation speed to the brake device;
   a temperature sensor that detects a temperature of the cooling oil;
   a pressure sensor that detects a pressure of the cooling oil; and
   a controller that is configured to control the rotation speed of the pump on a basis of detection results from the temperature sensor and the pressure sensor, wherein
   the controller is configured to
   control the rotation speed of the pump such that the rotation speed increases as the temperature of the cooling oil detected by the temperature sensor increases, and
   in a case in which an operation mode of the work vehicle is switched from a normal mode for executing work involving an operation of the brake device to a brake test mode for determining health of the brake device,
   control the rotation speed of the pump such that the rotation speed of the pump is higher in the brake test mode than that in the normal mode with respect to the temperature of the cooling oil detected by the temperature sensor in at least a part of a temperature range,
   determine whether an abnormality is occurring or not in the brake device on a basis of the detection result from the pressure sensor in the brake test mode, and output abnormality occurrence information in a case in which the controller determines that an abnormality is occurring.

2. The work vehicle according to claim 1, wherein

   the controller outputs the abnormality occurrence information, when determining that an abnormality is occurring in the brake device,
   to at least any one of

   an external system provided outside the work vehicle,
   a monitor that is provided to a cabin which an operator who operates the work vehicle is aboard, the monitor notifying the operator of information through screen display, and
   a buzzer that is provided to the cabin which the operator who operates the work vehicle is aboard, the buzzer notifying the operator of information through sound or voice.

3. The work vehicle according to claim 1, wherein

the work vehicle includes

a mode switching switch that selectively switches the operation mode of the work vehicle to either one of the normal mode and the brake test mode, and

a monitor that is provided to a cabin which an operator who operates the work vehicle is aboard, the monitor notifying the operator of information through screen display, and

the controller is configured to cause the operation mode selected by the mode switching switch to be displayed on the monitor.

4. The work vehicle according to claim 1, wherein

the controller is configured to

control, in the brake test mode, the rotation speed of the pump such that the rotation speed is constant independently of the temperature of the cooling oil detected by the temperature sensor in a temperature range lower than a predetermined first temperature and in a temperature range higher than a second temperature set to be higher than the first temperature, and control the rotation speed of the pump such that the rotation speed increases as the temperature of the cooling oil increases in a temperature range equal to or higher than the first temperature and equal to or lower than the second temperature, and

control, in the normal mode, the rotation speed of the pump such that the rotation speed is constant independently of the temperature of the cooling oil detected by the temperature sensor in a temperature range lower than a predetermined third temperature and in a temperature range higher than a fourth temperature set to be higher than the third temperature, and control the rotation speed of the pump such that the rotation speed increases as the temperature of the cooling oil increases in a temperature range equal to or higher than the third temperature and equal to or lower than the fourth temperature, and

the first temperature is lower than the third temperature, and the second temperature is lower than the fourth temperature.

5. The work vehicle according to claim 1, wherein
the controller is configured to stop an operation of the pump when determining that an abnormality is occurring in the brake device.

# FIG. 1

# FIG. 2

# FIG. 3

# FIG. 4

FIG. 5

EP 4 512 672 A1

# FIG. 6

FLOW RATE [L/min]

WHEN BRAKE TEST MODE IS OFF (NORMAL MODE)

O(0,0)

TEMPERATURE [°C]

FLOW RATE [L/min]

WHEN BRAKE TEST MODE IS ON (BRAKE TEST MODE)

O(0,0)

FIRST TEMPERATURE

SECOND TEMPERATURE

THIRD TEMPERATURE

FOURTH TEMPERATURE

TEMPERATURE [°C]

# FIG. 7

```
                    ┌─────────────────┐
                    │     START       │
                    └────────┬────────┘
                             │
                            S100
                    ╱─────────────────╲
                   ╱     IS BRAKE       ╲    NO
                   ╲   TEST MODE ON?    ╱────────────┐
                    ╲─────────────────╱             │
                             │ YES                   │
                             │◄──────────────────┐   │
                             ▼                   │   │
              ┌────────────────────────────┐     │   │
              │  SWITCH TO CONTROL TABLE    │ S110│   │
              │    IN BRAKE TEST MODE       │     │   │
              └──────────────┬─────────────┘     │   │
                             ▼                    │   │
              ┌────────────────────────────┐      │   │
              │  WAIT FOR SPECIFIED SECONDS │ S120 │   │
              │  UNTIL FLOW RATE STABILIZES │      │   │
              └──────────────┬─────────────┘      │   │
                             ▼  S130              │   │
                    ╱─────────────────╲            │   │
                   ╱       IS          ╲           │   │
                  ╱     VALUE OF         ╲   NO     │   │
                 ╱   PRESSURE SENSOR      ╲─────┐   │   │
                 ╲  EQUAL TO OR HIGHER    ╱     │   │   │
                  ╲   THAN SPECIFIE      ╱      ▼   │   │
                   ╲     VALUE?         ╱   S131 │   │   │
                    ╲─────────────────╱   ┌──────────┐  │
                             │ YES        │  ISSUE   │  │
                             │            │ WARNING  │  │
                             │◄───────────└──────────┘  │
                             ▼  S140                     │
                    ╱─────────────────╲                  │
                   ╱     IS BRAKE       ╲   YES           │
                   ╲   TEST MODE ON?    ╱─────────────────┘
                    ╲─────────────────╱
                             │ NO
                             ▼
              ┌────────────────────────────┐
              │  SWITCH TO CONTROL TABLE    │ S150
              │      IN NORMAL MODE         │
              └──────────────┬─────────────┘
                             │◄──────────────────────────
                             ▼
                    ┌─────────────────┐
                    │      END        │
                    └─────────────────┘
```

# FIG. 8

FLOW RATE
[L/min]

WHEN BRAKE TEST
MODE IS OFF
(NORMAL MODE)

O(0,0)

TEMPERATURE [°C]

FLOW RATE
[L/min]

WHEN BRAKE TEST
MODE IS ON
(BRAKE TEST MODE)

O(0,0)

TEMPERATURE [°C]

FIRST TEMPERATURE

SECOND TEMPERATURE

THIRD TEMPERATURE

FOURTH TEMPERATURE

# INTERNATIONAL SEARCH REPORT

International application No.

PCT/JP2023/024076

## A.    CLASSIFICATION OF SUBJECT MATTER

*B60T 5/00*(2006.01)i; *F16D 66/00*(2006.01)i; *B60T 8/17*(2006.01)i

FI:    B60T8/17 Z; B60T5/00 B; F16D66/00 Z

According to International Patent Classification (IPC) or to both national classification and IPC

## B.    FIELDS SEARCHED

Minimum documentation searched (classification system followed by classification symbols)

B60T5/00; F16D66/00; B60T8/17

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

## C.    DOCUMENTS CONSIDERED TO BE RELEVANT

| Category* | Citation of document, with indication, where appropriate, of the relevant passages | Relevant to claim No. |
|---|---|---|
| A | JP 11-348769 A (ROBERT BOSCH GMBH) 21 December 1999 (1999-12-21)<br>entire text, all drawings | 1-5 |
| A | JP 2019-528431 A (IPGATE AG) 10 October 2019 (2019-10-10)<br>entire text, all drawings | 1-5 |
| A | US 2016/0311422 A1 (IPGATE AG) 27 October 2016 (2016-10-27)<br>entire text, all drawings | 1-5 |
| A | WO 2009/034890 A1 (KOMATSU LTD.) 19 March 2009 (2009-03-19)<br>entire text, all drawings | 1-5 |
| A | WO 2018/179070 A1 (HITACHI CONSTRUCTION MACHINERY CO., LTD.) 04 October 2018 (2018-10-04)<br>entire text, all drawings | 1-5 |

☐ Further documents are listed in the continuation of Box C.          ☑ See patent family annex.

| | |
|---|---|
| \*    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **07 September 2023** | **19 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

### INTERNATIONAL SEARCH REPORT
**Information on patent family members**

International application No.

**PCT/JP2023/024076**

| Patent document cited in search report | | | Publication date (day/month/year) | Patent family member(s) | | | Publication date (day/month/year) |
|---|---|---|---|---|---|---|---|
| JP | 11-348769 | A | 21 December 1999 | US | 6206489 | B1 | |
| | | | | entire text, all drawings | | | |
| JP | 2019-528431 | A | 10 October 2019 | US | 2019/0299962 | A1 | |
| | | | | entire text, all drawings | | | |
| US | 2016/0311422 | A1 | 27 October 2016 | DE | 102015106089 | A1 | |
| | | | | entire text, all drawings | | | |
| WO | 2009/034890 | A1 | 19 March 2009 | US | 2010/0198472 | A1 | |
| | | | | entire text, all drawings | | | |
| WO | 2018/179070 | A1 | 04 October 2018 | US | 2020/0173145 | A1 | |
| | | | | entire text, all drawings | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009034890 A
- WO 2018179070 A